# FASCICULE DE BREVET EUROPEEN

(11) **EP 3 208 200 B1**
(45) Date de publication et mention de la délivrance du brevet: **19.02.2020**
(21) Numéro de dépôt: 17152028.1
(22) Date de dépôt: 18.01.2017
(51) Int. Cl.: B64G 1/22, B64G 1/50

(54) **STRUCTURE MONOBLOC POUR PANNEAU DE SATELLITE**
MONOBLOCKSTRUKTUR FÜR SATELLITENPANEEL
INTEGRAL STRUCTURE FOR SATELLITE PANEL

(30) Priorité: 17.02.2016 FR 1600262
(43) Date de publication de la demande: 23.08.2017
(73) Titulaire: Thales, 92400 Courbevoie (FR)
(72) Inventeur: MONTREDON, Florence, 06156 CANNES LA BOCCA Cedex (FR); POMMATAU, Gilles, 06156 CANNES LA BOCCA Cedex (FR); STANEK, Didier, 06156 CANNES LA BOCCA Cedex (FR)
(74) Mandataire: Joubert, Cécile

(56) Documents cités:
- WO-A1-2009/048676
- US-A1- 2002 102 384
- US-A1- 2010 291 401
- US-A1- 2013 143 060
- US-A1- 2015 048 209
- US-A1- 2015 259 081
- US-B1- 8 453 717

## Description

L'invention concerne des panneaux de satellite et plus précisément une structure monobloc constitutive de ces panneaux. Elle s'applique notamment au domaine spatial et plus précisément aux panneaux structuraux utilisés dans des satellites de télécommunication, d'observation et de mesures spatiales.

Les satellites embarquent typiquement plusieurs panneaux. Ces panneaux peuvent avoir plusieurs fonctions. Ils peuvent par exemple composer une structure porteuse sur laquelle d'autres équipements viennent se fixer. D'autres panneaux peuvent assurer une dissipation thermique dans un satellite : en effet, la chaleur produite par un composant n'est pas dissipée par convection ou diffusion gazeuse comme sur Terre, le satellite étant utilisé dans le vide. Un panneau peut alors assurer le support de moyens de dissipation et/ou contrôle thermique, tels que des caloducs, permettant un transport et une répartition de la chaleur produite et ainsi une diminution locale de la température dans le voisinage du composant. Enfin, un panneau peut supporter des moyens assurant le transport de données au sein du satellite lorsque des moyens de communications y sont intégrés, et/ou d'autres composants, tels que des générateurs solaires ou des réflecteurs d'antenne.

Les panneaux de satellite sont soumis à plusieurs types de contraintes mécaniques, de types aléatoires, transitoires ou harmoniques, notamment causées par des événements tels que le lancement du satellite, l'environnement acoustique, ou les chocs pyrotechniques. En parallèle, une réduction de la masse des panneaux est recherchée, permettant une économie de l'énergie nécessaire, par exemple, à une mise en orbite. Différentes solutions sont classiquement mises en œuvre pour trouver un compromis entre ces prérequis. Les panneaux peuvent être typiquement réalisés selon une architecture comprenant une structure dite en nid d'abeille (dont l'abréviation est nida). Une structure en nida, par exemple en aluminium, en titane ou en composé carboné, est logée entre deux feuilles, dites peaux, formant ainsi un panneau à feuille intercalaire alvéolée. De manière plus générale, une structure en treillis pourrait être utilisée. Ce type de structure est connu pour des treillis dont les barres, dont l'épaisseur est de l'ordre de quelques centimètres, sont assemblées par des éléments spécifiques, généralement agencés aux nœuds de la structure, ce qui peut rendre impossible la réalisation de l'assemblage dans le cas d'une structure comportant un très grand nombre de mailles et/ou des mailles de faibles dimensions, par exemple dans le cas de mailles du treillis dont la taille est de l'ordre du millimètre ou du micromètre. Contrairement aux structures en treillis, les structures en nida sont réalisables, en particulier pour des mailles dont la taille est de l'ordre du millimètre ou du micromètre, du fait de leur arrangement bidimensionnel. On peut par exemple les fabriquer à partir de feuillards collés puis étirés ou par extrusion.

Une solution de l'art antérieur, permettant de trouver un compromis entre résistance mécanique et légèreté consiste dans une variation discrète de la taille des cellules en nida entre les différentes zones du panneau : il est connu de diminuer localement la taille des cellules du nida dans les zones du panneau dans lesquelles les flux de cisaillement sont importants, et d'augmenter la taille des cellules dans d'autres zones pour diminuer la masse globale du panneau. Pour mettre en œuvre cette solution, des structures nida de tailles de cellule différentes peuvent être fabriquées, collées entre-elles et recouvertes des peaux par collage.

Une solution complémentaire, divulguée dans FR2971233, consiste à fabriquer un panneau comprenant une ou plusieurs peaux intermédiaires placées entre la structure en nida et les peaux, lesdites peaux intermédiaires comportant des cellules remplies d'un élément amortissant. Les différentes parties de cette structure sont elles aussi collées.

Les assemblages décrits précédemment nécessitent différents adhésifs : des films de colle sont typiquement utilisés pour l'assemblage des peaux, ou semelles, aux structures nida. Une colle moussante est utilisée lors de l'intégration d'un ou plusieurs caloducs dans une structure nida et une colle en pâte est utilisée pour l'assemblage des structures nida avec des inserts ou différents supports rapportés.

L'utilisation de la colle dans ces assemblages présente des problèmes techniques significatifs. D'une part, chaque interface collée détériore la performance thermique d'un panneau. En particulier, dans le cas d'un panneau en aluminium, la résistance thermique du panneau peut être significativement augmentée par l'utilisation de colle, en comparaison avec la résistance thermique du matériau structurel seul pour une géométrie donnée. D'autre part, les propriétés mécaniques des colles peuvent être différentes de celles des matériaux structurels. En particulier, le coefficient de dilatation thermique et/ou hygrométrique est significativement différent entre une colle et un métal, une céramique et/ou un matériau composite à base de fibres de carbone et de polymères. Cette différence peut induire des contraintes mécaniques lors de l'utilisation du satellite dans une gamme de températures (dans l'espace, la différence de température entre une face exposée au soleil et une face cachée du soleil peut être de l'ordre de 400°C) et/ou de degré hygrométrique large (entre la terre et l'espace par exemple). Les caractéristiques mécaniques de certaines colles ou de certains adhésifs, typiquement utilisés, présentent des variations importantes autour d'une température de transition de l'ordre de 80°C. Au-dessus de cette température, les dépôts de colle ou d'adhésifs correspondent à des zones moins résistantes de la structure.

Le comportement des colles ou des adhésifs sur des substrats métalliques dépend de l'état de surface du substrat. La reproductibilité de la fabrication d'une structure nécessite de traiter les surfaces métalliques, de manière à présenter un état de surface reproductible lors de l'étape de collage. Ces traitements de surface sont couteux (en produits de traitement et en contrôles) et nécessitent l'utilisation de produits toxiques.

De plus, l'insertion d'éléments fonctionnels, comme des caloducs, dans les panneaux, nécessite une réalisation de la structure du nida en deux parties, collées autour du caloduc préalablement réalisé. Un ajustage précis, nécessitant un outillage spécifique est souvent nécessaire à ces réalisations.

L'utilisation de colles dans les assemblages décrit précédemment impose des délais parfois longs lors de la réalisation de panneaux. Les temps de polymérisation des colles utilisées peuvent parfois atteindre plusieurs jours. Finalement, les procédés de dépôts typiques des colles permettent difficilement de réaliser un dépôt sans bulles. Or la présence de bulles entre les différentes parties d'une structure présente les inconvénients d'ordres mécanique et thermique décrits précédemment.

Le document WO 2009/048676 A1 divulgue un panneau comprenant une peau, une âme agencée en treillis et un canal entouré par l'âme.

L'invention vise à remédier à une partie ou à la totalité des inconvénients précités de l'art antérieur, et plus particulièrement à réaliser une structure pour panneau de satellite s'affranchissant des problèmes mécaniques liés aux variations en température et en hygrométrie des différents matériaux.

Un objet de l'invention permettant d'atteindre ce but, partiellement ou totalement, est une structure selon la revendication 1.

Avantageusement, la structure comprend deux dites peaux, séparées par ladite âme.

Avantageusement, la longueur maximale entre deux dits nœuds de la structure est inférieure à 50 mm.

Avantageusement, au moins une dite peau est localement plane et dans laquelle chaque dite barre est inclinée par rapport à ladite peau.

Avantageusement, la structure comporte au moins un insert plein dudit matériau, chaque dit insert étant monobloc avec l'ensemble.

Avantageusement, la densité dudit matériau de la structure, calculée sur le volume d'une dite maille, varie spatialement dans ladite âme.

Avantageusement, ladite densité dudit matériau de la structure, calculée sur le volume d'une dite maille, croît en s'approchant d'un dit insert.

Avantageusement, au moins un dit premier canal de la structure est choisi parmi un caloduc, un guide d'onde radiofréquence, un cheminement de câblage, un cheminement de fibre optique, un guide d'onde optique et un canal fluidique.

Avantageusement, au moins une dite peau de la structure comporte au moins un second canal, ledit second canal étant intégré et monobloc à ladite peau.

Avantageusement, l'agencement desdites mailles de la structure est isotrope.

Avantageusement, au moins une partie de ladite âme de la structure est auxétique.

Avantageusement, au moins une dite partie de l'âme de la structure est remplie, au moins partiellement, d'un matériau amortissant.

Avantageusement, une dite peau de la structure est portée par au moins deux plans sécants.

Avantageusement, une dite peau de la structure est courbe.

Avantageusement, une dite peau de la structure est ajourée.

Avantageusement, la structure est ajourée.

Avantageusement, la structure comprend une âme externe, agencée en treillis tridimensionnel, liée de manière solidaire à la face de l'une desdites peaux opposée à ladite âme, l'ensemble et ladite âme externe étant monoblocs.

Avantageusement, ladite âme externe de la structure comprend une pâte thermique, agencée dans les interstices formés par ledit treillis de ladite âme externe.

Avantageusement, la paroi intérieure d'un dit premier canal ou d'un dit second canal de la structure est texturée.

L'invention sera mieux comprise et d'autres avantages, détails et caractéristiques de celle-ci apparaîtront au cours de la description explicative qui suit, faite à titre d'exemple en référence aux dessins annexés dans lesquels :
- la figure 1 illustre schématiquement une réalisation d'une structure 1 pour panneau de satellite selon un mode de réalisation de l'invention ;
- la figure 2 illustre une maille conventionnelle d'une âme dans laquelle des nœuds sont agencés en réseau cubique centré ;
- la figure 3 illustre l'intégration de premiers canaux dans une structure selon une réalisation de l'invention ;
- la figure 4 illustre une partie d'une structure comportant une peau, une âme et un insert monoblocs ;
- la figure 5 est une photographie d'une partie d'une structure dans laquelle la densité du matériau de l'âme varie spatialement ;
- la figure 6 est une photographie d'une partie d'une structure selon un mode de réalisation de l'invention dans lequel une partie de l'âme est caractérisée par une densité de matériau nulle ;
- la figure 7 illustre schématiquement une structure comprenant un premier canal et un second canal ;
- la figure 8 illustre schématiquement la section d'une partie d'une structure dans laquelle une peau est courbe ;
- la figure 9 illustre une structure ajourée selon un mode de réalisation de l'invention en vue isométrique ;
- la figure 10 illustre schématiquement une méthode de synthèse additive ;
- la figure 11 illustre schématiquement une structure d'un panneau comprenant une âme externe et un composant ;
- la figure 12 illustre une partie de panneau selon un mode de réalisation de l'invention, réalisée par un assemblage de plusieurs structures.

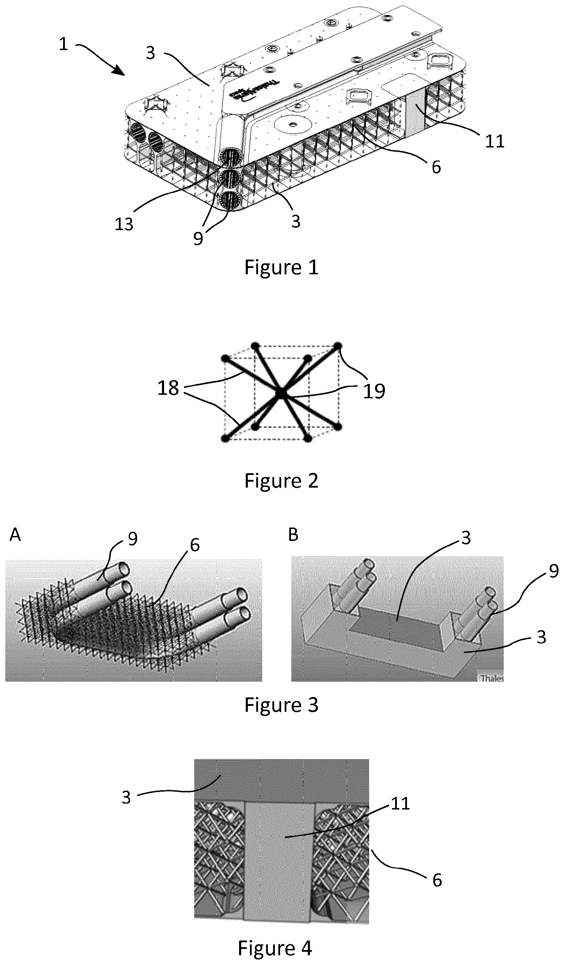

La figure 1 illustre schématiquement une structure pour panneau de satellite, en vue isométrique.

La figure 1 illustre schématiquement une réalisation d'une structure 1 pour panneau de satellite selon un mode de réalisation de l'invention. La structure 1 comprend une âme 6 agencée en treillis tridimensionnel.

On définit par treillis tridimensionnel un assemblage de barres dans l'espace (par exemple horizontales, verticales ou diagonales) se rejoignant en des nœuds 19 et définissant un agencement de polyèdres adjacents. Dans un exemple de treillis selon les réalisations de l'invention, les différentes barres peuvent former des rectangles et/ou des triangles. Dans un autre exemple de treillis, les différentes barres peuvent former uniquement des triangles ou uniquement des carrés. On entend par maille une cellule élémentaire de l'âme 6, ou en anglais « *lattice cell* ». Une maille peut correspondre à un volume élémentaire défini par plusieurs barres 18 et ne comprenant aucune barre 18 hormis aux arêtes de ce volume est appelé maille. Dans le cas d'un réseau périodique, une maille peut aussi correspondre au plus petit volume défini par des nœuds 19 et répété périodiquement pour définir le réseau. Les mailles d'un treillis peuvent être régulièrement agencées dans l'espace. Préférentiellement, les nœuds 19 d'une âme 6 sont agencés en réseau cubique centré. En variante, les nœuds 19 d'une âme 6 sont agencés en réseau cubique centré étiré. Dans d'autres variantes, d'autres structures connues de réseaux peuvent être envisagées : les nœuds 19 peuvent être agencés en réseau triclinique, monoclinique, orthorhombique, tétragonal, hexagonal par exemple.

Dans des réalisations de l'invention, la longueur d'une barre, définie comme la distance entre deux nœuds 19 voisins dans un réseau, est comprise entre 0,1 mm et 50 mm inclus. Préférentiellement, la longueur d'une barre est comprise entre 0,4 mm et 1,5 mm inclus. Cette gamme de longueur préférentielle de la longueur d'une barre est liée à une gamme de taille préférentielle d'une maille du treillis : dans des réalisations, la longueur maximale entre deux nœuds 19 d'une même maille est inférieure ou égale à 30 mm. Préférentiellement, la longueur maximale entre deux nœuds 19 d'une même maille est comprise entre 3 mm et 15 mm.

La structure 1 illustrée en figure 1 comprend également deux peaux 3. De manière plus générale, une réalisation de l'invention comprend au moins une peau 3. L'épaisseur d'une peau 3 peut être comprise entre 0,1 mm et 10 mm inclus, et préférentiellement entre 0,2 mm et 2 mm inclus. Une peau 3 est agencée sur une partie d'une surface définie par des nœuds 19 agencés à l'extrémité d'une âme 6. Dans la réalisation de la figure 1, la structure 1 comprend deux peaux 3, séparées par l'âme 6. Elles permettent, comme expliqué précédemment de reprendre des contraintes exercées sur un panneau, et plus particulièrement sur la structure 1.

La structure 1 illustrée en figure 1 comprend également deux premiers canaux 9. Plus généralement, une réalisation de l'invention comprend au moins un premier canal 9. Un premier canal 9 est intégré à l'âme 6. Par « intégré », on entend qu'au moins une partie du premier canal 9 est en contact avec une barre de l'âme 6. Par extension, on peut entendre par « intégré » qu'un premier canal 9 est entouré de l'âme 6. De manière générale, différents premiers canaux 9 peuvent être interconnectés pour définir un ou plusieurs circuits de premiers canaux 9.

La structure 1 illustrée en figure 1 est monobloc. D'une manière plus générale, une réalisation selon l'invention comprend au moins une peau 3, une âme 6 et au moins un premier canal 9 monoblocs. Par monobloc, on entend que ces parties de la structure 1 sont réalisées d'une seule pièce et ne comportent pas de discontinuité de matériau significative entre elles. En particulier, il n'existe pas d'interface particulière dans les zones de jonction d'une peau 3, d'un premier canal 9 et/ou d'une âme 6. Il est possible de réaliser la structure 1 illustrée en figure 1 en utilisant une méthode de synthèse additive, en particulier en utilisant une technologie dite lit de poudre. Des exemples de cette méthode sont donnés dans la suite de la description.

Cette caractéristique permet de résoudre les problèmes techniques liés à la présence de colles ou d'adhésifs entre les différentes parties constituant un panneau de satellite réalisé selon une méthode de l'art antérieur. En particulier, le transfert thermique n'est plus entravé.

La structure 1 peut être réalisée en utilisant un matériau unique. Ce matériau peut être métallique (aluminium, alliages à base d'aluminium, acier, titane, alliage à base de titane, alliage ferreux hyper-stable de type FeNi36), céramique ou polymère (par exemple de la famille des polyaryléthercétones et/ou des polyétherimides).

Dans des réalisations de l'invention, la structure 1 comporte également un ou plusieurs seconds canaux 13, intégrés à une peau 3. Dans des réalisations de l'invention, au moins un second canal 13 est intégré à une peau 3 et forment un monobloc. Une méthode de synthèse additive permet également la fabrication d'une structure 1 comprenant un second canal 13 et une peau 3 monoblocs.

La structure 1 illustrée en figure 1 comporte également un insert 11. Selon une réalisation de l'invention, au moins un insert 11, plein du matériau dans lequel est réalisée l'âme 6, est monobloc avec l'âme 6. Par insert, on définit un volume de matériau plein. Un insert 11 peut prendre des formes diverses, correspondant par exemple à une aile, une pelle, un fût, un barreau d'insert et/ou une accroche.

Dans des modes de réalisation de l'invention, la paroi intérieure d'un premier canal 9 ou d'un second canal 13, peut être texturée. Par texture, on entend des éléments permettant d'augmenter localement le rapport surface sur volume du matériau, comme par exemple des protubérances, des picots, des piliers, des rainures et/ou des stries. L'utilisation d'une paroi intérieure texturée d'un premier canal 9 et/ou d'un second canal 13 permet d'optimiser les échanges de chaleurs en augmentant le rapport surface sur volume de l'intérieur d'un canal. Un premier canal 9 et/ou un second canal 13 correspondent préférentiellement à un caloduc ou à un circuit fluidique. Dans les modes de réalisation de l'invention correspondants, l'utilisation d'une paroi intérieure texturée permet d'accroitre le rendement d'un caloduc et/ou d'un canal fluidique. Dans des modes de réalisation de l'invention, la texture de la paroi intérieure d'un premier canal 9 et/ou d'un second canal 13 peut être agencée dans l'ensemble du volume délimité par l'intérieur du canal : dans ce cas, l'intérieur du canal comporte une structure poreuse, dont les pores peuvent être agencés régulièrement ou irrégulièrement. Une telle structure poreuse peut être un grillage tridimensionnel et/ou d'un treillis interne à l'intérieur du canal. Dans un mode de réalisation de l'invention, l'écoulement dans une structure poreuse d'un premier canal 9 et/ou d'un second canal 13 est dominé par des forces capillaires, c'est-à-dire qu'il est caractérisé par un nombre capillaire *Ca* faible, typiquement inférieur à 10⁻², préférentiellement inférieur à 10⁻³ et préférentiellement inférieur à 10⁻⁴.

Dans des modes de réalisation de l'invention, les nœuds 19 d'une âme 6 sont agencés, en partie ou totalement, en réseau de mailles auxétiques. Ce type de structure peut comporter des caractéristiques mécaniques permettant d'amortir certains chocs. Par exemple, comparativement à une âme 6 agencée en nida, une âme 6 agencée en treillis peut comporter une plus grande capacité d'amortissement des chocs. En particulier, une âme 6 en treillis auxétique comporte une capacité d'amortissement des chocs plus grande qu'une âme agencée en nida et en treillis non-auxétique. Un matériau amortissant peut être introduit dans des parties de l'âme 6 (plus particulièrement entre les barres). Si des contraintes sont imposées à une structure 1, le volume des mailles auxétiques varie comparativement plus que le volume de mailles non auxétiques. Les contraintes peuvent alors être amorties en présence d'un matériau amortissant en combinaison avec un agencement de mailles auxétiques dans l'âme 6. Le matériau amortissant est par exemple un mousse polymère, un gel polymère, chacun comportant avantageusement une charge de particules solides. Avantageusement, le matériau amortissant peut être formé par un gel polymère initialement introduit dans l'âme 6 en phase liquide et solidifié par une adjonction d'un additif et/ou par traitement thermique. De manière générale, au moins une partie de ladite âme (6) est avantageusement auxétique dans la structure 1 et est remplie, au moins partiellement, d'un matériau amortissant.

L'utilisation d'une âme 6 agencée en treillis tridimensionnel dans une structure 1 comprend plusieurs avantages par rapport à l'utilisation d'une âme agencée en nida. Une âme 6 agencée en treillis peut présenter des propriétés de résistance mécanique plus isotropes qu'une structure en nida, en choisissant de manière adaptée la configuration des mailles.

Dans un mode de réalisation de l'invention, une peau 3 peut comporter différents éléments monoblocs avec la peau 3 : ces éléments peuvent être des accroches de tube, des supports de câblage et/ou des pions de fixation de protection thermique. Une protection thermique (comportant par exemple des couches métalliques et polymères) peut être fixée sur la surface de la structure par ces pions.

La figure 2 illustre une maille conventionnelle d'une âme 6 dans laquelle des nœuds 19 sont agencés en réseau cubique centré. Les cercles noirs de la figure 2 illustrent des nœuds 19 et les lignes noires illustrent des barres 18. Les traits en pointillés déterminent les limites d'une maille conventionnelle représentée par la figure 2. Dans un mode de réalisation de l'invention, une peau 3 comporte un plan principal, et est agencées parallèlement aux faces supérieures et inférieures du cube illustrant la maille. La direction principale de chaque barre de la structure n'est ni verticale ni horizontale dans le repère de la figure, c'est-à-dire qu'elle est sécante à la fois à un plan principal d'une peau 3 (ou à un plan parallèle au plan principal, par exemple le plan supérieur du cube) et à un plan perpendiculaires au plan principal d'une peau 3. Cette configuration permet de résoudre un problème technique. En effet, une structure différente de l'invention peut comporter une âme nida intercalée entre deux peaux parallèles. La fabrication d'une telle structure nécessite de fabriquer des plans de matériau perpendiculaires entre eux : d'une part les peaux et d'autre part les parois des cellules d'une âme en nida. La fabrication par synthèse additive d'une telle structure est limitée par une contrainte technique : lors d'une étape de fabrication réalisant une couche de matériau, un motif doit être supporté mécaniquement, même partiellement, par une couche de matériau réalisée lors d'une étape antérieure ou postérieure. Dans le cas contraire, il peut s'effondrer ou se déformer lors de la réalisation d'une structure. Une solution technique consiste à fabriquer l'ensemble de la structure inclinée par rapport au plan de fabrication du système de fabrication additive, par exemple de 45°. Cette solution nécessite de réaliser de nombreux supports pendant la fabrication pour incliner et/ou supporter la structure. Une structure comportant de nombreux plans perpendiculaires est difficilement réalisable.

Les inventeurs ont découvert que dans un mode de réalisation de l'invention, une âme 6 dont la maille est illustrée dans la figure 2 permet de résoudre ce problème : lors de la réalisation d'une âme 6 en treillis, chacune des barres 18 peut être inclinée (c'est-à-dire chacun des axes principaux des barres 18 peuvent être inclinés) par rapport à une peau 3 planaire ou localement planaire, et par rapport à un plan perpendiculaire à une peau 3. Lors de la fabrication par synthèse additive d'une structure selon un mode de réalisation de l'invention, une barre 18 peut être fabriquée sans s'effondrer, car elle peut être réalisée par différentes couches de matériau continu, décalées entres elles dans le plan horizontal correspondant à la réalisation d'une couche. Chacune des couches fournit un support mécanique à la suivante ou à la précédente. D'une manière plus générale, une structure selon un mode de réalisation de l'invention comporte au moins une peau 3 coïncidant avec un plan principal et une âme 6 agencée en treillis dans laquelle la direction principale de chaque barre 18 est sécante au plan principal et à un plan perpendiculaire au plan principal.

La figure 3 illustre l'intégration de premiers canaux 9 dans une structure 1 selon une réalisation de l'invention. Le panneau A de la figure 3 illustre une structure 1 dont les différentes peaux 3 ne sont pas visibles pour la compréhension de l'agencement des deux premiers canaux 9 dans l'âme 6. Dans cette réalisation, les deux premiers canaux 9 sont des canaux fluidiques. Chacun des premiers canaux 9 est entouré par l'âme 6. La structure 1 illustrée est monobloc. En fabricant la structure 1 par une méthode de synthèse additive, les zones joignant une âme 6 et un premier canal 9 sont réalisées en matériau continu. Le panneau B de la figure 3 illustre la même structure 1 comprenant des peaux 3 agencées sur les surfaces définies par les extrémités d'une âme 6. La partie du dispositif monobloc illustrée dans les panneaux de la figure 3 n'aurait pas pu être réalisée sans utiliser de procédé de synthèse additive.

La figure 4 illustre une partie d'une structure 1 comportant une peau 3, une âme 6 et un insert 11 monoblocs. Dans cette réalisation de l'invention, des ajouts, agencés aux coins de l'insert 11, sont en contact et monoblocs avec l'âme 6 et l'insert 11, selon un rayon de courbure de l'ordre de la taille d'une maille de l'âme 6. Ces ajouts permettent d'éviter une concentration localisée de contraintes mécaniques, possible dans un agencement où l'âme 6 est directement en contact avec un insert 11. Un ajout peut permettre d'éviter une amorce de rupture dans une structure 1 soumise à des contraintes mécaniques élevées.

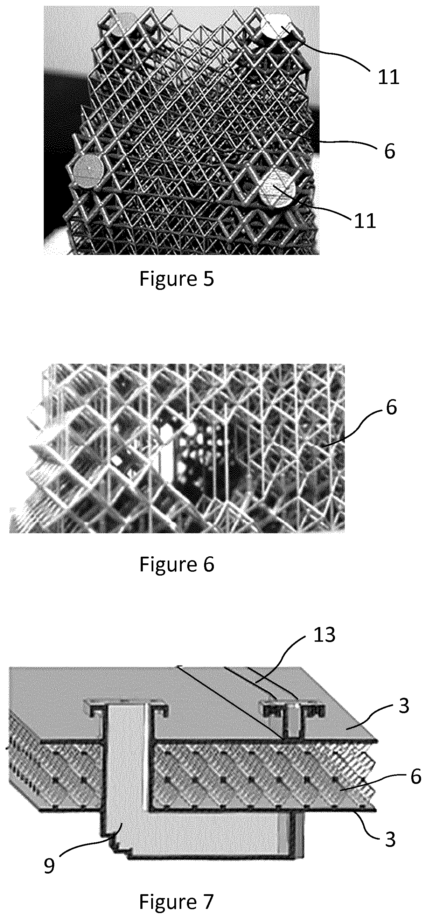

La figure 5 est une photographie d'une partie d'une structure 1 dans laquelle la densité du matériau de l'âme 6 varie spatialement. On entend par densité la densité volumique du matériau, c'est-à-dire, dans un volume donné, le rapport du volume occupé par le matériau sur le volume total. Dans un mode de réalisation de l'invention, la densité du matériau de l'âme 6, calculée sur le volume d'une maille, peut varier spatialement dans l'âme 6. Dans un mode de réalisation de l'invention, l'épaisseur d'une barre selon un axe perpendiculaire à son axe principal, peut varier d'une maille à l'autre. Cette caractéristique peut être appelée « treillis évolutif ». Dans le mode de réalisation de l'invention illustré dans la figure 4, la densité de matériau calculée sur le volume d'une maille, croît quand la distance de la maille avec un insert décroît, c'est-à-dire lorsqu'on s'approche d'un insert 11. Ce mode de réalisation permet de conférer des propriétés de résistance mécanique plus forte dans les zones de l'âme 6 qui peuvent être soumises aux contraintes les plus élevées lors de l'utilisation des panneaux d'un satellite. En particulier, ces zones de l'âme 6 peuvent correspondre aux zones entourant un ou plusieurs inserts 11 lorsque les inserts 11 sont des points d'accroche par exemple.

Dans une réalisation de l'invention, la densité du matériau de l'âme 6 croît en s'approchant d'une peau 3. Cette caractéristique présente un avantage technique lors de la réalisation de la structure : comme expliqué précédemment, la réalisation de certaines structures non supportées mécaniquement peut présenter des risques de déformations ou d'effondrement de la structure 1. C'est par exemple le cas de la réalisation d'une peau 3 fabriquée selon un plan horizontal. Une croissance de la densité du matériau de l'âme 6 au voisinage d'une peau 3 permet de supporter mécaniquement la peau 3 et ainsi éviter son effondrement.

La variation de la densité du matériau de l'âme 6 peut être discrète ou continue. Dans un mode de réalisation, elle peut varier de manière discrète entre deux mailles adjacentes d'une âme 6. Dans une variante, elle peut varier de manière continue : l'épaisseur d'une barre peut par exemple varier dans même une maille. Dans les deux cas, la densité du matériau peut varier entre 0 et 1 inclus. Dans le cas d'une variation de densité tendant vers 1, la forme des barres disparaît progressivement jusqu'à constater localement un bloc plein du matériau : l'âme 6 peut alors s'apparenter à un poreux. Le cas d'une variation de la densité du matériau tendant vers 0 correspond à un trou.

La figure 6 est une photographie d'une partie d'une structure 1 selon un mode de réalisation de l'invention dans lequel une partie de l'âme 6 est caractérisée par une densité de matériau nulle. Dans ce mode de réalisation de l'invention, un ensemble de mailles de densité en matériau non-nulle entoure un trou, c'est-à-dire une partie de l'âme 6 de densité en matériau nulle. Ce mode de réalisation de l'invention permet d'alléger localement une partie de la structure 1.

La figure 7 illustre schématiquement une structure 1 comprenant un premier canal 9 et un second canal 13. L'âme 6 illustrée dans la figure 7 comprend deux faces recouvertes par des peaux 3. Dans un mode de réalisation de l'invention, un premier canal 9 peut traverser l'âme 6 : seulement une partie du premier canal 9 est entourée de l'âme 6. La structure 1 illustrée dans la figure 7 comporte également un second canal 13. Dans ce mode de réalisation de l'invention, une section d'un canal (premier canal 9 et/ou second canal 13) est rectangulaire. Ce mode de réalisation peut être particulièrement adapté à la réalisation d'un guide d'onde par un premier canal 9 et/ou un second canal 13. De manière générale, la section d'un premier canal 9 et/ou d'un second canal 13 peut être ovale, en losange : ces formes peuvent être avantageuses pour la réalisation du canal. Par exemple, une section de canal en losange peut comporter des murs non parallèles à une peau 3 planaire ou par rapport à une direction perpendiculaire à une peau 3 planaire. Cette configuration permet de supporter la construction de chaque couche formant une paroi de canal lors de l'utilisation d'un procédé de synthèse additive pour la réalisation de la structure 1 et évite ainsi des déformations ou des effondrements lors d'une réalisation d'un canal.

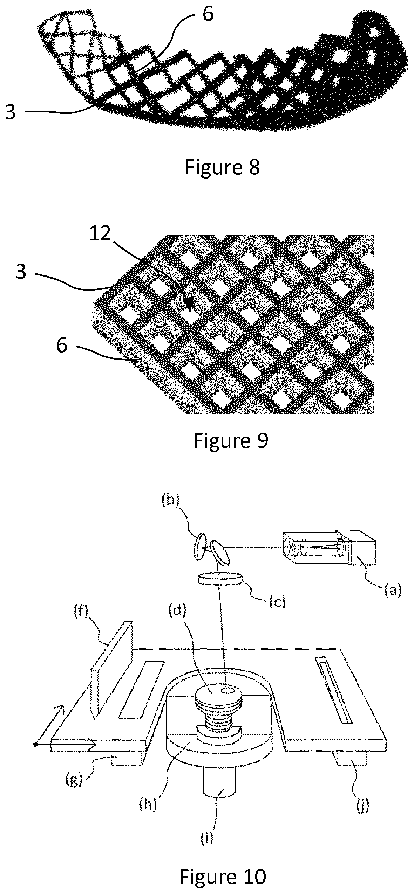

La figure 8 illustre schématiquement la section d'une partie d'une structure 1 dans laquelle une peau 3 est courbe. Dans des modes de réalisation de l'invention, une peau 3, ou enveloppe, peut correspondre à une surface tridimensionnelle. En particulier, une surface caractérisant une peau 3 peut être courbe. D'une manière plus générale, une peau 3 selon un mode de réalisation de l'invention peut ne pas être plane. Elle peut par exemple être formée par deux plans finis sécants joints par une arête. Dans le cas d'un angle de 90° entre les deux plans, une section d'une peau 3 peut former un « L ». L'épaisseur d'une peau 3 peut également varier dans l'espace. Dans l'exemple de réalisation de la figure 8, l'épaisseur de la peau 3 à gauche de la figure est inférieure à l'épaisseur de la peau 3 à droite de la figure. La figure 8 illustre également un mode de réalisation de l'invention dans lequel les mailles du treillis sont anisotropes et adaptées à une peau 3 courbe, et dans lequel la densité du matériau est variable : elle croît de gauche à droite de la figure 8.

Dans des modes de réalisation, l'agencement des mailles en treillis de l'âme 6 peut être anisotrope, spatialement irrégulier et/ou adapté localement aux contraintes mécaniques : la densité des mailles, soit le nombre de mailles pour un volume donné, peut varier spatialement. On qualifie cet agencement des mailles d'agencement à géométrie variable. Sa réalisation est possible par un procédé de synthèse additive.

La figure 9 illustre une structure 1 ajourée selon un mode de réalisation de l'invention en vue isométrique. D'une manière générale, l'âme 6 d'une structure 1 peut être ajourée, c'est-à-dire comporter un trou de l'une de ses faces à l'autre. Une âme 6 peut comprendre plusieurs ajours 12. Une peau 3 peut être aussi ajourée et peut comprendre plusieurs ajours 12. Dans le mode de réalisation de l'invention illustré en figure 7, des parties correspondantes de l'âme et de deux peaux sont ajourées, de manière périodique. Cette caractéristique peut permettre la réalisation d'une structure 1 plus légère.

La figure 10 illustre schématiquement une méthode de synthèse additive. Les structures 1 selon les modes de réalisation de l'invention peuvent être réalisées par des méthodes de synthèse additive. Préférentiellement, on utilise une méthode de fabrication additive par lit de poudre pour la réalisation d'une structure 1 métallique, telle que la fusion sélective par laser (ou LBM, acronyme de l'anglais *Laser Beam Melting*) ou la fusion sélective par faisceau d'électron (ou EBM, acronyme de l'anglais *Electron Beam Melting*)*,* le dépôt de fil fondu (*Fusion Deposition Modelling* en anglais pour les polymères ou plus généralement *Wire Deposition*) et/ou la projection de poudre (traduit en anglais par *blown powder*)*.* Lors de la réalisation d'une structure 1 en céramique, on peut utiliser le frittage sélectif par laser ou la *stéréolithographie* (SLA) avec une charge céramique. Lors de la fabrication d'une structure 1 par fusion sélective par laser, une fine couche de poudre du matériau est déposée sur un plan (avantageusement horizontal, défini par les deux flèches noires) par un grattoir de poudre (f), la poudre provenant de différents réservoirs (g, j), sur une baie de fusion (d) soutenue par une embase (h), comprise dans une plateforme d'impression (i). Une fois la poudre déposée, un faisceau laser issu d'une source laser (a), dirigé par des miroirs de scanner (b) et focalisés par une lentille (c) permet de fondre la poudre sur la partie du lit de poudre interagissant avec le faisceau laser.

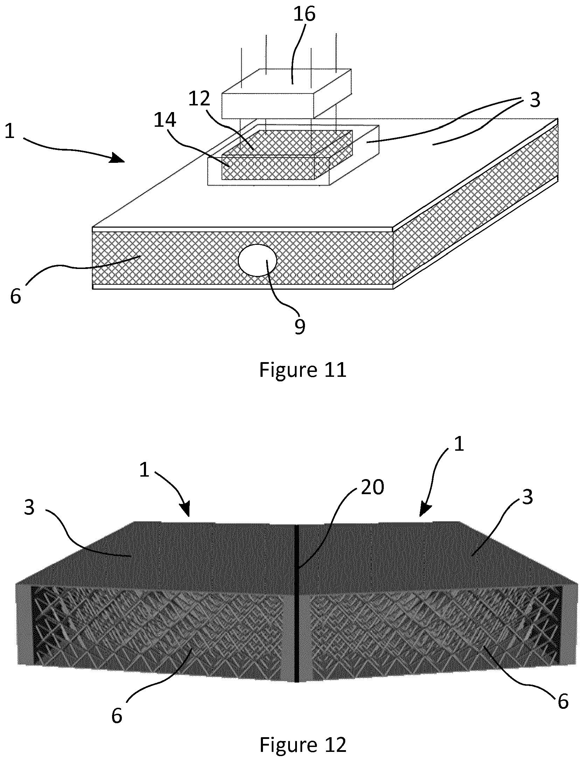

La figure 11 illustre schématiquement une structure 2 d'un panneau comprenant une âme externe 12 et un composant 16. Un composant 16 peut être une cellule photovoltaïque, un photodétecteur, ou tout autre type de composant électronique. Dans cet exemple de réalisation de l'invention, une âme externe est agencée sur l'une des peaux 3, de manière monobloc. Selon les réalisations de l'invention, l'âme externe 12 peut être entourée de peaux 3, comme illustré dans la figure 11. Lors de la réalisation de la structure 1, une pâte thermique 14 peut être injectée dans l'âme externe 12, de manière en remplir, partiellement ou totalement, les parties qui ne sont pas occupées par le matériau. L'injection de cette pâte thermique permet d'augmenter la conductivité thermique de l'ensemble constitué *a minima* d'une âme externe 12 et de pâte thermique 14, et dans l'exemple de la figure 11 d'une âme externe 12, remplie de pâte thermique 14 et entourée de peaux 3. Dans des modes de réalisation de l'invention, la pâte thermique utilisée peut être de la paraffine, une pâte à base de silicone, de céramique (suspension de particules de céramiques), une pâte comportant des particules métalliques et/ou une graisse. D'une manière plus générale, on peut utiliser toute pâte permettant une augmentation de la conductivité thermique par rapport à la conductivité thermique de l'âme externe et/ou de l'âme externe recouverte de peaux 3.

Dans des modes de réalisation de l'invention, le composant 16 est en contact avec l'âme externe 12 et/ou une peau 3 recouvrant l'âme externe 12 de manière à favoriser l'échange de chaleur. Dans la figure 11, l'ensemble comportant l'âme externe 12 recouverte de peaux 3 est séparé d'un composant 16 pour la compréhension de l'agencement : ces deux éléments sont en contacts dans les modes de réalisation de l'invention. Les traits continus verticaux aux coins du composant 16 illustrent l'axe de vis permettant de réaliser une liaison solidaire entre l'âme externe 12 et le composant 16. Cette liaison peut être directe, ou réalisée par l'intermédiaire d'une peau 3 recouvrant l'âme externe 12. Des inserts 11 peuvent être réalisés dans la structure 1, de manière monobloc, pour recevoir les vis permettant de lier le composant 16 à la structure 1.

La figure 12 illustre une partie de panneau selon un mode de réalisation de l'invention, réalisée par un assemblage de plusieurs structures 1. Deux structures 1 sont liées de manière solidaire. Elles peuvent être liées par exemple par une ou plusieurs soudures 20, ou par toute autre manière de lier les deux structures 1 de manière solidaire. La ou les soudures 20 sont par exemple réalisées entre des peaux 3. Lors de la fabrication d'une structure 1 par synthèse additive, la taille maximale de la structure 1 est limitée par la taille du système de synthèse additive. Une partie de panneau selon un mode de réalisation permet de résoudre ce problème en liant par une ou plusieurs soudures différentes structures 1 fabriquées par synthèse additive.

Des structures 1 selon les modes de réalisation de l'invention peuvent aussi être intégrées dans la réalisation d'autres systèmes, différents des satellites, par exemple dans des modules habitables spatiaux, des stations spatiales ou des systèmes de transport stratosphérique de type dirigeable.

## Revendications

1. Structure (1) pour panneau de satellite, comprenant un ensemble monobloc comprenant :
- au moins une peau (3) ;
- une âme (6) agencée en treillis tridimensionnel, ledit treillis comprenant un agencement de mailles déterminées par des nœuds (19) séparés par des barres (18) et
- au moins un premier canal (9) dont au moins une partie est intégrée à ladite âme (6), c'est-à-dire que ladite partie du premier canal est entourée par l'âme et des barres de l'âme sont en contact avec une paroi extérieure de ladite partie du premier canal,
ledit ensemble étant en matériau métallique, polymère ou céramique.

2. Structure selon la revendication précédente comprenant deux dites peaux (3), séparées par ladite âme (6).

3. Structure selon l'une des revendications précédentes dans laquelle la longueur maximale entre deux dits nœuds (19) est inférieure à 50 mm.

4. Structure selon l'une des revendications précédentes dans laquelle au moins une dite peau (3) est localement plane et dans laquelle chaque dite barre (18) est inclinée par rapport à ladite peau (3).

5. Structure selon l'une des revendications précédentes comportant au moins un insert (11) plein dudit matériau, chaque dit insert (6) étant monobloc avec ledit ensemble.

6. Structure selon l'une des revendications précédentes dans laquelle la densité dudit matériau, calculée sur le volume d'une dite maille, varie spatialement dans ladite âme (6).

7. Structure selon la revendication 5 à 6 dans laquelle ladite densité dudit matériau, calculée sur le volume d'une dite maille, croît en s'approchant d'un dit insert (11).

8. Structure selon l'une des revendications précédentes dans laquelle au moins un dit premier canal (9) est choisi parmi un caloduc (7), un guide d'onde radiofréquence (8), un cheminement de câblage, un cheminement de fibre optique, un guide d'onde optique et un canal fluidique.

9. Structure selon l'une des revendications précédentes dans laquelle au moins une dite peau (3) comporte au moins un second canal (13), ledit second canal (13) étant intégré et monobloc à ladite peau (3).

10. Structure selon l'une des revendications précédentes dans laquelle l'agencement desdites mailles est isotrope.

11. Structure selon l'une des revendications précédentes dans laquelle au moins une partie de ladite âme (6) est auxétique.

12. Structure selon la revendication précédente dans laquelle au moins une dite partie de l'âme (6) est remplie, au moins partiellement, d'un matériau amortissant.

13. Structure selon l'une des revendications précédentes dans laquelle une dite peau (3) est portée par au moins deux plans sécants.

14. Structure selon l'une des revendications précédentes dans laquelle une dite peau (3) est courbe.

15. Structure selon l'une des revendications précédentes dans laquelle une dite peau (3) est ajourée.

16. Structure selon l'une des revendications précédentes ajourée.

17. Structure selon l'une des revendications précédentes comprenant une âme externe (12), agencée en treillis tridimensionnel, liée de manière solidaire à la face de l'une desdites peaux (3) opposée à ladite âme (6), ledit ensemble et ladite âme externe (12) étant monoblocs.

18. Structure selon la revendication précédente dans laquelle ladite âme externe (12) comprend une pâte thermique (14), agencée dans les interstices formés par ledit treillis de ladite âme externe (12).

19. Structure selon l'une des revendications précédentes dans lequel la paroi intérieure d'un dit premier canal (9) ou d'un dit second canal (13) est texturée.

## Patentansprüche

1. Struktur (1) für ein Satellitenpaneel, beinhaltend eine Monoblockbaugruppe, Folgendes beinhaltend:
- mindestens eine Haut (3);
- einen Kern (6), welcher als dreidimensionales Gitter angeordnet ist, wobei das Gitter eine durch Knoten (19), welche durch Stäbe (18) getrennt sind, bestimmte Maschenanordnung beinhaltet, und
- mindestens einen ersten Kanal (9), von welchem mindestens ein Abschnitt in den Kern (6) integriert ist, d. h., dass der Abschnitt des ersten Kanals durch den Kern umgeben ist, und dass Stäbe des Kerns in Kontakt mit einer äußeren Wand des Abschnittes des ersten Kanals stehen,
wobei die Baugruppe aus einem Metall-, Polymer- oder Keramikmaterial besteht.

2. Struktur nach dem vorhergehenden Anspruch, beinhaltend zwei genannte Häute (3), welche durch den Kern (6) getrennt sind.

3. Struktur nach einem der vorhergehenden Ansprüche, bei welcher die maximale Länge zwischen zwei genannten Knoten (19) unter 50 mm beträgt.

4. Struktur nach einem der vorhergehenden Ansprüche, bei welcher mindestens eine genannte Haut (3) lokal eben ist und bei welcher jeder genannte Stab (18) in Bezug auf die Haut (3) geneigt ist.

5. Struktur nach einem der vorhergehenden Ansprüche, beinhaltend mindestens einen massiven Einsatz (11) aus dem Material, wobei jeder genannte Einsatz (6) mit der Baugruppe einen Monoblock bildet.

6. Struktur nach einem der vorhergehenden Ansprüche, bei welcher die Dichte des Materials, berechnet über das Volumen einer genannten Masche, räumlich in dem Kern (6) variiert.

7. Struktur nach Anspruch 5 bis 6, bei welcher die Dichte des Materials, berechnet über das Volumen einer genannten Masche, ansteigt, je mehr man sich einem genannten Einsatz (11) nähert.

8. Struktur nach einem der vorhergehenden Ansprüche, bei welcher mindestens ein genannter erster Kanal (9) gewählt ist aus einem Wärmerohr (7), einem Funkfrequenz-Hohlwellenleiter (8), einer Kabelleiste, einem Lichtwellenleiterkanal, einem optischen Hohlwellenleiter und einem Fluidkanal.

9. Struktur nach einem der vorhergehenden Ansprüche, bei welcher mindestens eine genannte Haut (3) mindestens einen zweiten Kanal (13) beinhaltet, wobei der zweite Kanal (13) in die Haut (3) integriert ist und damit einen Monoblock bildet.

10. Struktur nach einem der vorhergehenden Ansprüche, bei welcher die Anordnung der Maschen isotrop ist.

11. Struktur nach einem der vorhergehenden Ansprüche, bei welcher mindestens ein Abschnitt des Kerns (6) auxetisch ist.

12. Struktur nach einem der vorhergehenden Ansprüche, bei welcher mindestens ein Abschnitt des Kerns (6) mindestens teilweise mit einem dämpfenden Material gefüllt ist.

13. Struktur nach einem der vorhergehenden Ansprüche, bei welcher eine genannte Haut (3) durch mindestens zwei Schnittebenen getragen wird.

14. Struktur nach einem der vorhergehenden Ansprüche, bei welcher eine genannte Haut (3) gekrümmt ist.

15. Struktur nach einem der vorhergehenden Ansprüche, bei welcher eine genannte Haut (3) durchbrochen ist.

16. Durchbrochene Struktur nach einem der vorhergehenden Ansprüche.

17. Struktur nach einem der vorhergehenden Ansprüche, beinhaltend einen äußeren Kern (12), welcher als dreidimensionales Gitter angeordnet ist, welches fest mit der Seite einer der Häute (3) verbunden ist, welche dem Kern (6) abgewandt ist, wobei die Baugruppe und der äußere Kern (12) einen Monoblock bilden.

18. Struktur nach einem der vorhergehenden Ansprüche, bei welcher der äußere Kern (12) eine thermische Paste (14) beinhaltet, welche in den Zwischenräumen angeordnet ist, welche durch das Gitter des äußeren Kerns (12) gebildet werden.

19. Struktur nach einem der vorhergehenden Ansprüche, bei welcher die innere Wand eines genannten ersten Kanals (9) oder eines genannten zweiten Kanals (13) strukturiert ist.

## Claims

1. A structure (1) for a satellite panel, comprising a one-piece assembly comprising:
- at least one skin (3);
- a core (6) arranged as a three-dimensional lattice, said lattice comprising an arrangement of meshes determined by nodes (19) separated by bars (18); and
- at least one first channel (9), at least one part of which is integrated in said core (6), i.e. said part of the first channel is surrounded by the core and bars of the core are in contact with an external wall of said part of the first channel,
said assembly being made of metal, polymer or ceramic material.

2. The structure as claimed in the preceding claim, comprising two of said skins (3) separated by said core (6).

3. The structure as claimed in any one of the preceding claims, wherein the maximum length between two of said nodes (19) is less than 50 mm.

4. The structure as claimed in any one of the preceding claims, wherein at least one of said skins (3) is locally flat and wherein each of said bars (18) is inclined relative to said skin (3).

5. The structure as claimed in any one of the preceding claims, comprising at least one solid insert (11) of said material, each of said inserts (6) being integral with said assembly.

6. The structure as claimed in any one of the preceding claims, wherein the density of said material, computed on the basis of the volume of one of said meshes, spatially varies in said core (6).

7. The structure as claimed in claims 5 to 6, wherein said density of said material, computed on the basis of the volume of one of said meshes, increases on the approach to one of said inserts (11).

8. The structure as claimed in any one of the preceding claims, wherein at least one of said first channels (9) is selected from a heat pipe (7), a radiofrequency wave guide (8), a wiring routing, an optical fibre routing, an optical waveguide and a fluid channel.

9. The structure as claimed in any one of the preceding claims, wherein at least one of said skins (3) comprises at least one second channel (13), said second channel (13) being integrated in and integral with said skin (3).

10. The structure as claimed in any one of the preceding claims, wherein the arrangement of said meshes is isotropic.

11. The structure as claimed in any one of the preceding claims, wherein at least one part of said core (6) is auxetic.

12. The structure as claimed in the preceding claim, wherein at least one of said parts of the core (6) is at least partially filled with a damping material.

13. The structure as claimed in any one of the preceding claims, wherein one said skin (3) is supported by at least two intersecting planes.

14. The structure as claimed in any one of the preceding claims, wherein one said skin (3) is curved.

15. The structure as claimed in any one of the preceding claims, wherein one said skins (3) is apertured.

16. The structure as claimed in any one of the preceding claims being apertured.

17. The structure as claimed in any one of the preceding claims, comprising an external core (12), arranged as a three-dimensional lattice, rigidly connected to the face of one of said skins (3) opposite said core (6), said assembly and said external core (12) being one-piece.

18. The structure as claimed in the preceding claim, wherein said external core (12) comprises a thermal paste (14), arranged in the gaps formed by said lattice of said external core (12).

19. The structure as claimed in any one of the preceding claims, wherein the internal wall of one of said first channels (9) or of one of said second channels (13) is textured.
